# FASCICULE DE BREVET EUROPEEN

(11) **EP 2 141 842 B1**
(45) Date de publication et mention de la délivrance du brevet: **31.07.2013**
(21) Numéro de dépôt: 09164223.1
(22) Date de dépôt: 30.06.2009
(51) Int. Cl.: H04J 14/02, H04Q 11/00

(54) **Dispositif de commutation de signaux optiques**
Schaltelement für optische Signale
Optical signal switching device

(30) Priorité: 30.06.2008 FR 0854418; 29.10.2008 FR 0857360
(43) Date de publication de la demande: 06.01.2010
(73) Titulaire: Alcatel Lucent, 75007 Paris (FR)
(72) Inventeur: Zami, Thierry, 91620, Nozay (FR); Brogard, Nicolas, 92120, Montrouge (FR)
(74) Mandataire: Sciaux, Edmond

(56) Documents cités:
- EP-A- 1 349 417
- EP-A- 1 879 308
- CHEN JIANPING ET AL: "An experimental study of an optical burst switching network based wavelength-selective optical switches" IEEE COMMUNICATIONS MAGAZINE, IEEE SERVICE CENTER, PISCATAWAY, US, vol. 43, no. 5, 1 mai 2005 (2005-05-01), pages S3-S10, XP011134841 ISSN: 0163-6804
- WEI S HU ET AL: "Multicasting Optical Cross Connects Employing Splitter-and-Delivery Switch" IEEE PHOTONICS TECHNOLOGY LETTERS, IEEE SERVICE CENTER, PISCATAWAY, NJ, US, vol. 10, no. 7, 1 juillet 1998 (1998-07-01), pages 970-972, XP011046132 ISSN: 1041-1135
- ZAMI T ET AL: "Driving technologies addressing the future dynamic transparent core networks" TRANSPARENT OPTICAL NETWORKS, 2008. ICTON 2008. 10TH ANNIVERSARY INTERNATIONAL CONFERENCE ON, IEEE, PISCATAWAY, NJ, USA, 22 juin 2008 (2008-06-22), pages 194-197, XP031306298 ISBN: 978-1-4244-2625-6
- PAOLO GHELFI ET AL: "Optical Cross Connects Architecture with per-Node Add&Drop Functionality" OPTICAL FIBER COMMUNICATION CONFERENCE AND EXPOSITION NATIONAL FIBER OPTIC ENGINEERS CONFERENCE. OFCNFOEC 2007 - 25-29 MARCH 2007 - ANAHEIM, CA, USA, IEEE - PISCATAWAY, NJ, USA, 1 mars 2007 (2007-03-01), pages 1-6, XP031146478 ISBN: 978-1-55752-831-5
- KEYWORTH B P: "ROADM subsystems & technologies" OPTICAL FIBER COMMUNICATION CONFERENCE, 2005. TECHNICAL DIGEST. OFC/NF OEC ANAHEIM, CA, USA MARCH 6-11, 2005, PISCATAWAY, NJ, USA,IEEE, vol. 3, 6 mars 2005 (2005-03-06), pages 35-38, XP010831633 ISBN: 978-1-55752-783-7
- MIN ZHANG ET AL: "The performance analysis of an efficient contention resolution for optical packet switching" 2003 IEEE MILITARY COMMUNICATIONS CONFERENCE. MILCOM 2003. BOSTON, MA, OCT. 13 - 16, 2003; [IEEE MILITARY COMMUNICATIONS CONFERENCE], NEW YORK, NY : IEEE, US, vol. 1, 13 octobre 2003 (2003-10-13), pages 283-288, XP010698254 ISBN: 978-0-7803-8140-7
- MECHELS S ET AL: "1D MEMS-based wavelength switching subsystem" IEEE COMMUNICATIONS MAGAZINE, IEEE SERVICE CENTER, PISCATAWAY, US, vol. 41, no. 3, 1 mars 2003 (2003-03-01), pages 88-94, XP011095709 ISSN: 0163-6804
- NAIL AKAR ET AL: "Performance Analysis of an Optical Packet Switch Employing Full/Limited Range Share Per Node Wavelength Conversion" GLOBAL TELECOMMUNICATIONS CONFERENCE, 2007. GLOBECOM '07. IEEE, IEEE, PISCATAWAY, NJ, USA, 1 novembre 2007 (2007-11-01), pages 2369-2373, XP031196379 ISBN: 978-1-4244-1042-2
- SHIZHONG XU ET AL: "Dynamic Routing and Assignment of Wavelength Algorithms in Multifiber Wavelength Division Multiplexing Networks", IEEE JOURNAL ON SELECTED AREAS IN COMMUNICATIONS, IEEE SERVICE CENTER, PISCATAWAY, US, vol. 18, no. 10, 1 October 2000 (2000-10-01), XP011055243, ISSN: 0733-8716

## Description

L'invention se rapporte au domaine des réseaux optiques WDM transparents, notamment à des dispositifs de commutation pour réseau optique transparent qui sont capables de commuter des canaux de longueur d'onde sans les convertir dans le domaine électronique.

La maîtrise de la technologie de la transmission par fibre optique à multiplexage de longueurs d'onde optiques ou WDM est un facteur important pour répondre aux besoins croissants de débits dans la transmission d'informations. On applique le qualificatif « transparent » à un système de transmission dans lequel le signal reste dans le domaine optique sans conversion dans le domaine électronique. La transparence dans les réseaux de communication optique est une caractéristique qui permet de réduire le coût des équipements de réseau en supprimant des conversions optique-électrique-optique, et donc des transducteurs correspondants. Des sous-systèmes utilisés dans les réseaux WDM transparents sont notamment les multiplexeurs optiques reconfigurables à insertion-extraction ou ROADM et les brasseurs optiques transparents ou OXC. Pour réaliser de tels sous-systèmes, les équipements connus sous le nom de commutateur à sélection de longueurs d'onde ou WSS (Wavelength Selective Switch) présentent un intérêt considérable. En effet, ces équipements permettent de réaliser des noeuds de commutation de degré quelconque ayant une grande flexibilité de configuration avec une structure nettement plus simple qu'en utilisant des composants discrets, un encombrement moindre et une fiabilité élevée. Des commutateurs à sélection de longueurs d'onde et leurs applications sont décrits, entre autres, dans S. MECHELS et al., IEEE Communication Magazine, mars 2003, pp 88-94.

SHIZHONG XU ET AL: "Dynamic Routing and Assignment of Wavelength Algorithms in Multifiber Wavelength Division Multiplexing Networks", IEEE JOURNAL ON SELECTED AREAS IN COMMUNICATIONS, IEEE SERVICE CENTER, PISCATAWAY, US, vol. 18, no. 10, 1 Octobre 2000 (2000-10-01), XP011055243, ISSN: 0733-8716, décrit un noeud de routage de longueurs d'ondes comportant un démultiplexeur d'entrée par fibre optique d'entrée, un commutateur optique par canal de longueur d'onde et un démultiplexeur de sortie par fibre optique de sortie. Chaque multiplexeur est relié à tous les commutateurs optiques. Chaque démultiplexeur est relié à tous les commutateurs optiques.

ERAMO V ET AL: "Multifiber Shared-Per-Wavelength All-Optical Switching: Architectures, Control, and Performance", JOURNAL OF LIGHTWAVE TECHNOLOGY, IEEE SERVICE CENTER, NEW YORK, NY, US, vol. 26, no. 5, 1 mars 2008 (2008-03-01), pages 537-551, XP011207181, ISSN: 0733-8724 décrit un noeud de commutation multifibres selon une variante de l'architecture diffusion-sélection. Un combineur optique à la sortie du noeud est toujours relié à tous les coupleurs de diffusion situés à l'entrée.

Selon un mode de réalisation, l'invention fournit un dispositif de commutation de signaux optiques comportant :
une pluralité de coupleurs de diffusion, chacun comportant une entrée apte à recevoir un signal optique entrant à multiplexage de longueurs d'onde et une première pluralité de sorties pour diffuser ledit signal optique entrant,
une pluralité de modules de sélection de longueurs d'onde, chacun comportant une première pluralité d'entrées pour recevoir des canaux de longueur d'onde et une sortie pour transmettre un signal optique sortant à multiplexage de longueurs d'onde sortie pour transmettre un signal optique sortant à multiplexage de longueurs d'onde obtenu sélectivement à partir des canaux de longueur d'onde reçus sur ladite première pluralité d'entrées,
des moyens de liaison optiques reliant une deuxième pluralité desdites sorties des coupleurs de diffusion à une deuxième pluralité desdites entrées des modules de sélection de longueurs d'onde pour faire transiter des signaux optiques entrants reçus par lesdits coupleurs de diffusion vers lesdits modules de sélection de longueurs d'onde,
lesdits modules de sélection de longueurs d'onde étant agencés en une pluralité de groupes, chacun desdits groupes comportant plusieurs desdits modules de sélection de longueurs d'onde, les modules de sélection de longueurs d'onde d'un groupe étant à chaque fois destinés à être reliés en sortie à un noeud voisin commun, par exemple via un même câble optique, lesdits moyens de liaison optiques étant agencés de manière à permettre, pour chacun desdits coupleurs de diffusion, la diffusion du signal optique entrant reçu par ledit coupleur vers au plus un seul module de sélection de longueurs d'onde de chaque groupe .

Selon d'autres modes de réalisation avantageux, ce dispositif de commutation peut présenter une ou plusieurs des caractéristiques suivantes :
- les coupleurs de diffusion sont agencés en une pluralité de groupes, au moins un desdits groupes comportant plusieurs desdits coupleurs de diffusion, les coupleurs de diffusion d'un groupe étant à chaque fois destinés à être reliés en entrée à un noeud voisin commun, par exemple via un même câble optique.
- chacun des modules de sélection de longueurs d'onde comporte lesdites entrées en nombre sensiblement égal au nombre des groupes de coupleurs de diffusion. Un tel agencement permet d'utiliser des modules de sélection de longueurs d'onde dont le nombre de ports est relativement réduit par rapport au nombre des fibres optiques reliées au dispositif.
- lesdits groupes de coupleurs de diffusion et lesdits groupes de modules de sélection de longueurs d'onde sont en nombre égaux. En variante le dispositif peut présenter une asymétrie à cet égard.
- les moyens de liaison optiques sont agencés de manière à permettre, pour chacun desdits modules de sélection de longueurs d'onde, le transit simultané vers ledit module de sélection de longueurs d'onde de signaux optiques provenant d'au moins un coupleur de diffusion de chaque groupe de coupleurs.
- au moins un ou chacun desdits coupleurs de diffusion comporte lesdites sorties en nombre sensiblement égal au nombre des groupes de modules de sélection de longueurs d'onde. Un tel agencement permet d'utiliser des coupleurs de diffusion dont le nombre de ports est relativement réduit par rapport au nombre des fibres optiques reliées au dispositif et donc de limiter les pertes d'insertion.
- lesdits moyens de liaison optiques comportent des guides d'onde reliant à chaque fois une sortie de ladite deuxième pluralité de sorties à une entrée de ladite deuxième pluralité d'entrées.
- les guides d'onde relient chaque coupleur de diffusion à au moins un module de sélection de longueurs d'onde de chaque groupe.
- un coupleur de diffusion recevant ledit signal optique entrant depuis un noeud voisin n'a aucune liaison optique directe avec un groupe de modules de sélection de longueurs d'onde reliés audit noeud voisin. Un tel agencement permet de réduire le nombre de ports utilisés au niveau des modules de sélection de longueur d'onde.
- lesdits moyens de liaison optiques comportent au moins une matrice de commutation spatiale optique comportant des entrées reliées à des sorties de ladite deuxième pluralité de sorties et des sorties reliées à des entrées de ladite deuxième pluralité d'entrées.
- les sorties de la matrice de commutation spatiale optique sont reliées à au moins un module de sélection de longueurs d'onde de chaque groupe, ou à chacun des modules de sélection de longueurs d'onde.
- les entrées de la matrice de commutation spatiale optique sont reliées à au moins un coupleur de diffusion de chaque groupe, ou à chacun des coupleurs de diffusion.
- les moyens de liaison optiques comportent une pluralité de matrices de commutation spatiale optique comportant des entrées reliées à des sorties de ladite deuxième pluralité de sorties et des sorties reliées à des entrées de ladite deuxième pluralité d'entrées.
- lesdites matrices de commutation spatiale optique sont en nombre inférieur ou égal au nombre desdites entrées d'un module de sélection de longueurs d'onde, chacun desdits module de sélection de longueurs d'onde ayant des entrées reliées à toutes lesdites matrices de commutation spatiale optique, chacun desdits coupleurs de diffusion ayant des sorties reliées à toutes lesdites matrices de commutation spatiale optique.
- au moins un ou chacun desdits coupleurs de diffusion comporte une sortie reliée à un module d'extraction pour démoduler des données numériques portées par au moins un canal de longueur d'onde du signal optique entrant reçu par ledit coupleur de diffusion. En variante, un module d'extraction peut être raccordé en d'autres points du dispositif.
- au moins un ou chacun desdits modules de sélection de longueurs d'onde comporte une entrée reliée à un module d'insertion pour insérer au moins un canal de longueur d'onde dans le signal optique sortant dudit module de sélection de longueurs d'onde. En variante, un module d'insertion peut être raccordé en d'autres points du dispositif.
- les coupleurs de diffusion et les modules de sélection de longueurs d'onde sont en nombre égaux. En variante le dispositif peut présenter une asymétrie à cet égard.

Selon un mode de réalisation particulier, ledit dispositif de commutation comporte en outre :
au moins un ensemble de recirculation, ledit ou chaque ensemble de recirculation comportant un module de recirculation de longueurs d'onde comportant une pluralité d'entrées pour recevoir des canaux de longueur d'onde et une sortie pour transmettre un signal optique recirculé à multiplexage de longueurs d'onde obtenu sélectivement à partir des canaux de longueur d'onde reçus sur ladite pluralité d'entrées, un coupleur de recirculation comportant une entrée reliée à la sortie dudit module de recirculation de longueurs d'onde pour recevoir ledit signal optique recirculé correspondant et une pluralité de sorties pour diffuser ledit signal optique recirculé,
des deuxièmes moyens de liaison optiques reliant une troisième pluralité desdites sorties des coupleurs de diffusion à une troisième pluralité des entrées du ou des modules de recirculation de longueurs d'onde pour faire transiter des signaux optiques entrants reçus par lesdits coupleurs de diffusion vers le ou les modules de recirculation de longueurs d'onde,
des troisièmes moyens de liaison optiques reliant une quatrième pluralité des sorties du ou des coupleurs de recirculation à une quatrième pluralité desdites entrées des modules de sélection de longueurs d'onde pour faire transiter le ou les signaux optiques recirculés reçus par le ou les coupleurs de recirculation vers lesdits modules de sélection de longueurs d'onde.

Le dispositif de commutation selon ce mode de réalisation particulier peut aussi présenter une ou plusieurs des caractéristiques suivantes :
- les deuxièmes moyens de liaison optiques sont agencés de manière à faire transiter simultanément vers ledit ou chaque module de recirculation de longueurs d'onde des signaux optiques entrants reçus par au moins un coupleur de diffusion de chaque groupe.
- les troisièmes moyens de liaison optiques sont agencés de manière à permettre la diffusion dudit ou de chaque signal optique recirculé vers au moins un module de sélection de longueurs d'onde de chaque groupe simultanément.
- la troisième pluralité d'entrées est en nombre supérieur ou égal au nombre des coupleurs de diffusion. En d'autres termes, le nombre d'ensembles de recirculation et le nombre d'entrées par module de recirculation sont tels que chaque coupleur de diffusion est relié à au moins un ensemble de recirculation.
- la quatrième pluralité de sorties est en nombre supérieur ou égal au nombre des modules de sélection de longueurs d'onde. En d'autres termes, le nombre d'ensembles de recirculation et le nombre de sorties par coupleur de recirculation sont tels que chaque module de sélection de longueurs d'onde est relié à au moins un ensemble de recirculation.
- les deuxièmes et troisièmes moyens de liaison optiques comportent des guides d'onde reliant à chaque fois une sortie de ladite troisième, respectivement quatrième, pluralité de sorties à une entrée de ladite troisième, respectivement quatrième, pluralité d'entrées.
- aucune liaison optique directe ne relie une sortie d'un coupleur de recirculation à une entrée d'un module de recirculation de longueurs d'onde.

Une idée à la base de l'invention est de concevoir des architectures optiques de type diffusion et sélection pour des noeuds ayant un nombre élevé de fibres entrantes et sortantes tout en limitant le nombre de ports nécessaires au niveau des modules de sélection de longueur d'onde.

Une autre idée à la base de l'invention est de tenir compte de la connectivité des noeuds en termes de directions de liaison, c'est-à-dire en termes de noeuds voisins avec lesquels le trafic est échangé. Une direction de liaison peut comporter une pluralité de fibres optiques connectées à un même noeud voisin et qui peuvent donc être utilisées de manière équivalente pour transférer un signal optique vers ce noeud voisin. Les fibres optiques d'une direction de liaison peuvent éventuellement être agencées sous la forme d'un câble.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
Les figures 1 et 2 sont une représentation schématique fonctionnelle d'un noeud optique selon un premier mode de réalisation.
La figure 3 est une représentation schématique fonctionnelle d'un noeud optique selon un deuxième mode de réalisation.
La figure 4 est une représentation schématique fonctionnelle d'un noeud optique selon un troisième mode de réalisation.
La figure 5 est une représentation schématique fonctionnelle d'un noeud optique selon un quatrième mode de réalisation.
La figure 6 est une représentation schématique fonctionnelle d'un noeud optique selon un cinquième mode de réalisation.
La figure 7 est une représentation schématique fonctionnelle d'un réseau optique dans lequel des modes de réalisation peuvent être utilisés.
La figure 8 est une représentation schématique fonctionnelle d'un noeud optique selon un sixième mode de réalisation.
La figure 9 est une vue partielle d'un détail du noeud de la figure 8.

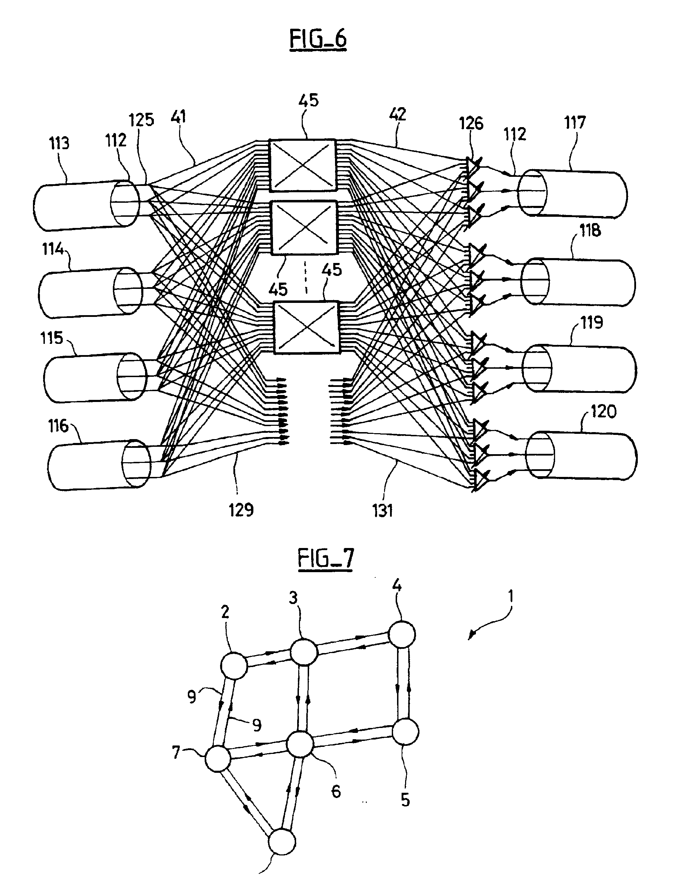

En référence à la figure 7, un réseau WDM maillé 1 comporte une pluralité de noeuds optiques 2 à 8 reliés par des liens directionnels représentés par des flèches 9. Chaque lien peut consister en une ou plusieurs fibres optiques. En particulier, pour un réseau à haute capacité, par exemple un réseau de coeur d'un opérateur de télécommunication, un lien doit généralement comporter plusieurs fibres optiques. Pour faciliter leur mise en place, ces fibres optiques peuvent être rassemblées sous la forme d'un câble. Dans un tel réseau, chacun des noeuds 2 à 8 doit donc être capable de commuter des signaux optiques entre un grand nombre de fibres optiques entrantes et sortantes qui relient à chaque fois ledit noeud à un nombre limité de noeuds voisins. On appelle degré de connectivité du noeud le nombre de ses noeuds voisins. Par exemple sur la figure 7, le noeud 6 présente un degré de connectivité égal à 4 et le noeud 3 un degré de connectivité égal à 3.

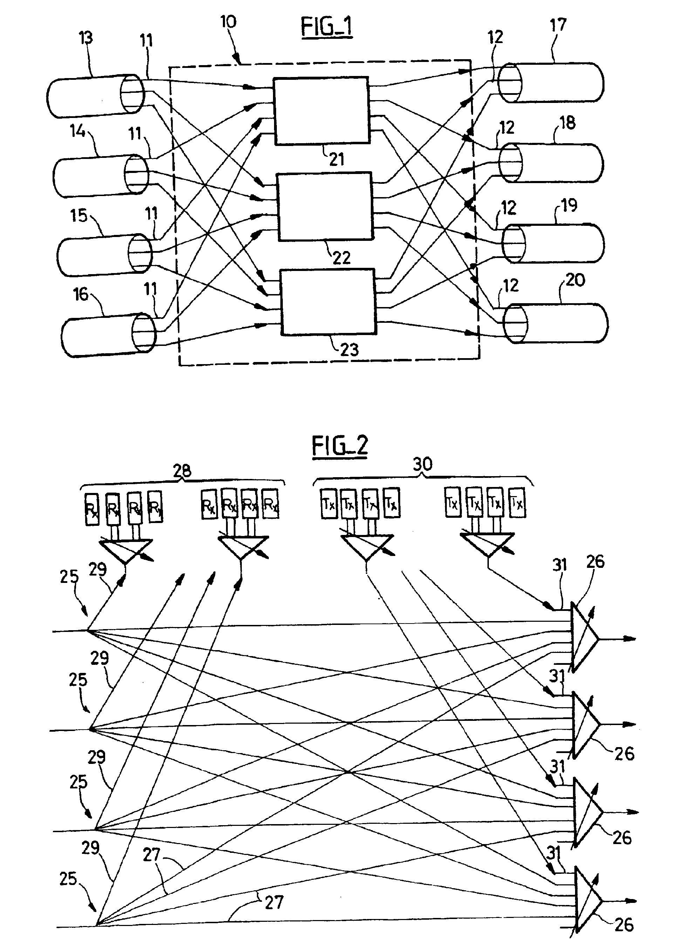

En référence aux figures 1 à 6, on va maintenant décrire plusieurs architectures optiques convenant pour réaliser des noeuds optiques de ce type. Par mesure de simplicité, seule a été représentée la partie optique du noeud de commutation servant à faire transiter des signaux dans le domaine optique entre des entrées et des sorties du noeud et, le cas échéant, à extraire et/ou insérer localement des signaux optiques. Bien d'autres éléments non représentés peuvent entrer dans la constitution d'un noeud optique, notamment un ou plusieurs modules de commande pour contrôler la commutation et, le cas échéant, l'insertion et l'extraction des signaux. Ce contrôle doit notamment éviter les collisions entre canaux de longueurs d'onde.

Des modules de commande peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

En référence à la figure 1, un dispositif de commutation 10 convenant pour réaliser un noeud optique de degré 4 a été représenté. Les blocs 21, 22 et 23 renvoient à la figure 2. Le dispositif 10 comporte des entrées, ici au nombre de 12, pour connecter des fibres optiques entrantes 11 portant des canaux de longueurs d'onde multiplexés entrants et des sorties, ici au nombre de 12, pour connecter des fibres optiques sortantes 12 portant des canaux de longueurs d'onde multiplexés sortants. Les chiffres 13 à 16 désignent quatre groupes de fibres entrantes 11, ici avec 3 fibres par groupe, qui sont à chaque fois reliées à un même noeud voisin. Les chiffres 17 à 20 désignent quatre groupes de fibres sortantes 12, ici avec 3 fibres par groupe, qui sont à chaque fois reliées à un même noeud voisin. Les fibres optiques d'un groupe peuvent être à chaque fois agencées sous la forme d'un ou plusieurs câbles.

L'architecture de la figure 1 reprend des caractéristiques des architectures de type diffusion et sélection (broadcast and select). Chaque entrée du dispositif 10 est connectée à un coupleur de diffusion 25 qui reçoit le signal WDM entrant et le diffuse vers plusieurs commutateurs à sélection de longueur d'onde (WSS) 26. Chaque sortie du dispositif 10 est connectée à un WSS 26 qui reçoit des signaux WDM de plusieurs coupleurs de diffusion 25. Par extension, on appellera un groupe de coupleurs de diffusion l'ensemble des coupleurs de diffusion 25 qui sont connectés à un groupe de fibres entrantes 13, 14, 15 ou 16. De même, on appellera un groupe de WSS l'ensemble des WSS 26 qui sont connectés à un groupe de fibres sortantes 17, 18, 19 ou 20.

Une architecture type diffusion et sélection classique consisterait à relier chaque WSS 26 à tous les coupleurs de diffusion 25. Pour le noeud de la figure 1, cette architecture classique supposerait des WSS à 12 entrées et des coupleurs à 12 sorties. Des inconvénients d'une telle approche sont le coût élevé des WSS ayant un nombre de ports élevé et les pertes d'insertion des coupleurs qui croissent avec le nombre des sorties.

Par contraste, dans le mode de réalisation de la figure 1, chaque coupleur n'est relié qu'à un seul WSS 26 par groupe, à savoir à 4 WSS. De plus, chaque WSS 26 n'est relié qu'à 4 coupleurs 25. Les liaisons optiques 27 entre les sorties des coupleurs 25 et les entrées des WSS 26 peuvent être des fibres optiques ou d'autres sortes de guides d'onde. D'autres composants non représentés peuvent être montés sur ces liaisons, par exemple amplificateurs ou modules de compensation de la dispersion chromatique ou autres composants de compensation des dégradations physiques.

Ainsi, si on appelle N le degré de connectivité du noeud, le dispositif 10 est réalisable avec des coupleurs ayant N branches de sortie et des WSS ayant N ports d'entrée et permet de faire transiter de manière transparente un ou plusieurs canaux depuis toute fibre entrante 11 vers les N noeuds voisins simultanément.

On rappelle qu'un commutateur à sélection de longueurs d'onde (WSS) est un équipement comportant une pluralité de ports sélectionnables et au moins un port commun et pouvant remplir une fonction de multiplexage programmable ou de démultiplexage programmable. Lorsqu'il agit en tant que multiplexeur, les ports sélectionnables servent d'entrées et le port commun sert de sortie commune. Le commutateur à sélection de longueurs d'onde est capable d'aiguiller des canaux de longueur d'onde (c'est-à-dire des signaux optiques portés par des longueurs d'onde respectives) reçus sur les entrées, sélectivement en fonction des longueurs d'onde des canaux reçus et des entrées respectives et en fonction d'un signal de commande, vers la sortie commune de cet équipement. Les canaux aiguillés vers la sortie commune doivent avoir des longueurs d'onde différentes. L'équipement réalise alors une fonction de multiplexage programmable permettant de fournir en sortie un canal sélectionné parmi les canaux reçus sur les entrées ou un multiplex de canaux constitué d'un ensemble de canaux sélectionnés parmi les canaux reçus. Sur chaque port d'entrée, on peut envoyer un canal, plusieurs canaux ou aucun canal.

De manière facultative, comme représenté sur la figure 2, le dispositif 10 peut comporter un module d'extraction 28 relié aux coupleurs 25. Dans ce cas, les coupleurs 25 comportent une ou plusieurs sorties supplémentaires 29 vers le module d'extraction 28. Le module d'extraction 28 comprend un ou plusieurs récepteurs optiques pour démoduler les données des signaux optiques à extraire. Il peut aussi comporter divers composants optiques pour sélectionner les canaux à extraire, tels que démultiplexeurs, coupleurs, filtres fixes ou accordables, portes optiques, WSS, etc. Dans ce cas, le nombre de sorties d'un coupleur 25 est supérieur au degré de connectivité du noeud, par exemple égal à N+1.

De manière facultative, comme représenté sur la figure 2, le dispositif 10 peut comporter un module d'insertion 30 relié aux WSS 26. Dans ce cas, les WSS 26 comportent une ou plusieurs entrées supplémentaires 31 reliées au module d'insertion 30. Le module d'insertion 30 comprend un ou plusieurs transmetteurs optiques, fixes ou accordables en longueur d'onde, pour générer les signaux optiques à insérer. Il peut aussi comporter divers composants optiques pour combiner, aiguiller ou conditionner les signaux optiques à insérer, tels que multiplexeurs, combineurs, portes optiques, amplificateurs, WSS, etc. Dans ce cas, le nombre d'entrées d'un WSS 26 est supérieur au degré de connectivité du noeud, par exemple égal à N+1.

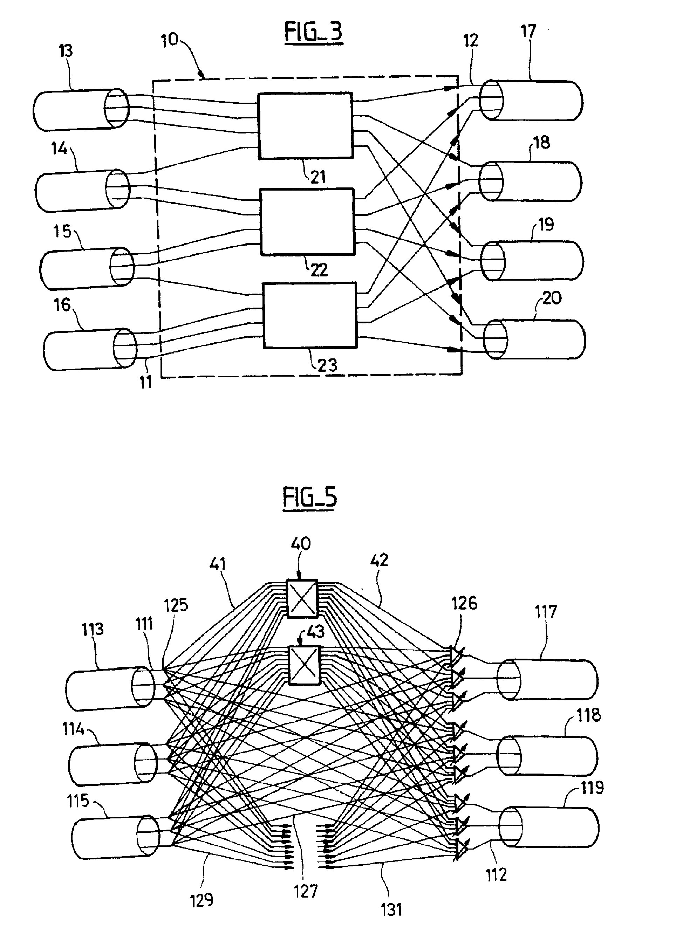

Dans le mode de réalisation des figures 1 et 2, chaque WSS 26 comporte une entrée reliée à un coupleur 25 de chaque groupe, de manière à pouvoir recevoir au moins un signal WDM de chaque noeud voisin. Toutefois, d'autres agencements sont aussi possibles en ce qui concerne la provenance des signaux transitant par un même module de sélection de longueurs d'onde. Par exemple, un autre agencement est représenté sur la figure 3, où les éléments identiques ou analogues à ceux de la figure 1 portent le même chiffre de référence.

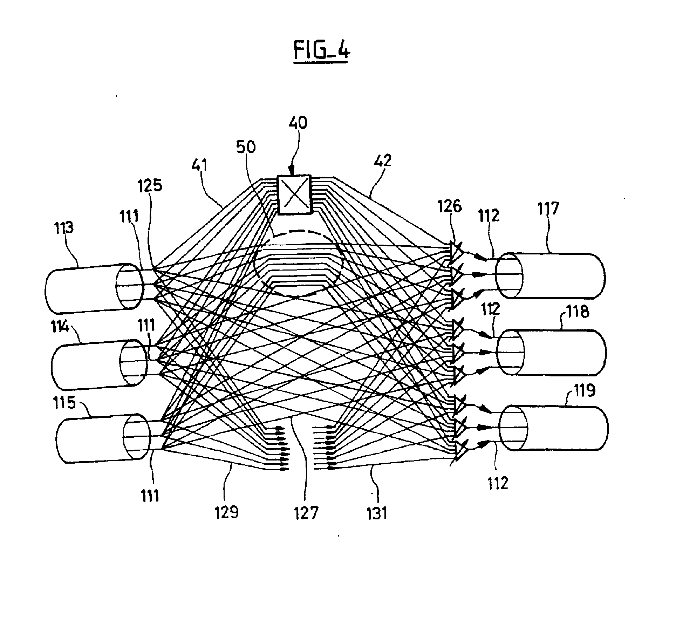

Sur les figures 1 et 3, les blocs 21 à 23 qui ont été représentés séparément pour clarifier la représentation ne correspondent pas nécessairement à des structures matérielles du noeud. En référence à la figure 4, on va maintenant décrire un autre mode de réalisation où cette représentation par blocs n'a pas été employée. Les éléments identiques ou analogues à ceux des figures 1 et 2 portent le même chiffre de référence augmenté de 100.

La figure 4 représente schématiquement un dispositif de commutation 110 convenant pour réaliser un noeud optique de degré 3. Les liaisons directes 127 entre les coupleurs de diffusion 125 et les WSS 126 sont agencés de manière similaire aux figures 1 et 2, bien que la représentation soit différente. En d'autres termes, chaque WSS 126 comporte une entrée reliée à un coupleur 125 de chaque groupe 113, 114 et 115 et chaque coupleur 125 comporte une sortie reliée à un WSS 126 de chaque groupe 117, 118 et 119. Les liens 129 représentent une branche de sortie de chaque coupleur 125 dédiée à l'extraction de signaux optiques. Les liens 131 représentent une branche d'entrée de chaque WSS 126 dédiée à l'insertion de signaux optiques.

La connectivité limitée procurée par les liaisons directes 27/127 entre les coupleurs de diffusion 25/125 et les WSS 26/126 peut s'avérer insuffisante dans certaines situations. En effet, comme le signal d'entrée reçu par un coupleur donné n'est diffusé qu'à un seul WSS par groupe, il ne peut être transmis que sur une seule fibre de sortie 12/112 par noeud de destination. Il peut se produire une situation de contention pour un canal de longueur d'onde sur cette fibre sortante. Par ailleurs, si l'un des WSS 26/126 tombe en panne, la protection du trafic correspondant ne peut pas être assurée par le dispositif de commutation 10/110 puisqu'il ne peut pas transférer ce trafic vers le même noeud de destination à travers un autre WSS.

Pour accroître la flexibilité du noeud, notamment dans les situations précitées, le dispositif de commutation peut comporter une ou plusieurs matrices de commutation spatiale optique agencées entre les coupleurs 25/125 et les WSS 26/126, en addition ou en remplacement des liaisons directes 27/127.

Sur la figure 4, une seule matrice de commutation spatiale optique 40 est prévue, qui présente une entrée respective reliée à chacun des coupleurs 125, via des liens 41, et une sortie respective reliée à chacun des WSS 126, via des liens 42.

On appelle M le nombre des fibres d'entrée 111, qui est ici égal au nombre des fibres de sortie 112. La matrice de commutation spatiale optique 40 est ici une matrice à M entrées et M sorties. C'est un composant qui effectue un routage purement spatial strictement non bloquant. Elle est donc capable d'effectuer une connexion transparente de n'importe quelle entrée vers n'importe quelle sortie. Cette connexion est transparente à tout le contenu spectral qui se trouve sur l'entrée en question, e.g. au sein d'une grille de longueurs d'onde prédéterminée pour laquelle la matrice est conçue. En d'autres termes, s'il n'entre qu'un seul canal de longueur d'onde, ce seul canal est dirigé vers la sortie sélectionnée. S'il entre 100 canaux, ils sont tous dirigés vers cette sortie de la matrice. Une telle matrice convient pour router simultanément et sélectivement M signaux WDM, i.e. des ensembles de canaux spectraux, respectivement depuis les M entrées vers les M sorties. Des matrices de commutation spatiale de ce type peuvent être réalisées à l'aide de micro réflecteurs contrôlés par des systèmes micro-électromécaniques (MEMS). Elles sont notamment disponibles auprès des sociétés GlimmerGlass (Hayward, Etats-Unis) et Polatis Inc. (Billerica, Etats-Unis). Les pertes d'insertion peuvent être relativement faibles, par exemple environ 4 ou 5 dB. Le nombre des ports peut être relativement élevé, par exemple 100 à 200.

Sur la figure 4, grâce à la matrice 40, un ou plusieurs canaux arrivant sur une fibre d'entrée donnée 111, donc sur un coupleur 125, peuvent être acheminés vers n'importe quel WSS 126, donc vers toutes les fibres de sortie 112. Cette matrice peut donc être utilisée pour acheminer ces canaux vers leur noeud de destination via un autre WSS que le WSS relié directement à ce coupleur, i.e. via un autre WSS du groupe correspondant à cette destination. Sur la figure 4, la matrice de commutation spatiale 40 est donc agencée en addition des liaisons directes 127. Une ou plusieurs matrices de commutation spatiale peuvent être agencées de la sorte, sous réserve de prévoir des sorties en nombre correspondant au niveau des coupleurs 125 et des entrées en nombre correspondant au niveau des WSS 126. Ainsi, sur la figure 4, le nombre d'entrées des WSS est N+2.

Une autre possibilité pour améliorer la flexibilité de la commutation transparente des signaux est de prévoir une ou plusieurs matrices de commutation spatiale agencées en remplacement de certaines liaisons directes 127. Des modes de réalisation correspondants vont maintenant être décrits en référence aux figures 5 et 6, où les éléments identiques ou analogues à ceux de la figure 4 portent le même chiffre de référence.

Dans un cas d'utilisation fréquent, le trafic entre les noeuds d'un réseau optique transparent est bidirectionnel, de sorte qu'un noeud optique est relié à un noeud voisin à la fois par un groupe de fibres entrantes et par un groupe de fibres sortantes. Par exemple, si le mode de réalisation de la figure 4 est employé pour réaliser le noeud 3 de la figure 7, les groupes de fibres 113 et 117 sont reliés au même noeud voisin 2, les groupes de fibres 114 et 118 sont reliés au même noeud voisin 4 et les groupes de fibres 115 et 119 sont reliés au même noeud voisin 6. Dans ce cas, les liaisons directes 127 qui relient à chaque fois un coupleur 125 et un WSS 126 associé au même noeud voisin que le coupleur, ces liaisons étant mises en évidence par le cercle 50 sur la figure 4, présentent une utilité limitée ou inexistante pour le routage du trafic en règle générale. Sur la figure 5, ces liaisons directes sont remplacées par une matrice de commutation spatiale 43, similaire à la matrice 40 décrite précédemment et connectée de la même manière en parallèle avec celle-ci.

Sur la figure 5, on a prévu deux matrices 40 et 43, ce qui permet d'accroître la flexibilité de routage des signaux, notamment pour faire face à des situations de contention et de protection. Dans une variante de réalisation de la figure 5, par exemple pour diminuer le nombre des ports nécessaires au niveau des WSS 126, la matrice 40 avec les liens 41 et 42 peuvent être supprimés.

La flexibilité de routage des signaux est croissante avec le nombre des matrices de commutation spatiale. La figure 6 représente un mode de réalisation convenant pour un noeud de degré 4, dans lequel il n'y a aucune liaison directe entre les coupleurs 125 et les WSS 126, mais seulement des matrices de commutation spatiale 45. Celles-ci sont ici en nombre égal au degré de connectivité du noeud, l'une d'entre elles n'étant pas représentée. Chacune des matrices 45 présente une entrée respective reliée à chacun des coupleurs 125, via des liens 41, et une sortie respective reliée à chacun des WSS 126, via des liens 42.

Comme visible sur les figures 4 à 6, des liens directs et des matrices de commutation spatiale peuvent être combinés en diverses proportions entre les coupleurs de diffusion 125 et les WSS 126, en fonction de la flexibilité de routage voulue. Cette flexibilité peut être mesurée par le nombre de chemins spatiaux distincts que le dispositif de commutation est capable de créer entre une fibre d'entrée donnée et un noeud de destination donné.

Malgré le nombre relativement faible des ports d'entrée des WSS 126, ce nombre étant par exemple égal au nombre de directions entrantes, e.g. 4 sur la figure 6, plus un pour l'insertion locale de trafic si nécessaire, le fait de combiner ces WSS avec des matrices de commutation spatiale ayant un nombre de ports élevé permet donc de créer une architecture de noeud avec un niveau de flexibilité satisfaisant. En variante, le nombre de matrices de commutation spatiale peut être supérieur au degré de connectivité du noeud, dans la limite du nombre de ports d'entrée des WSS 126.

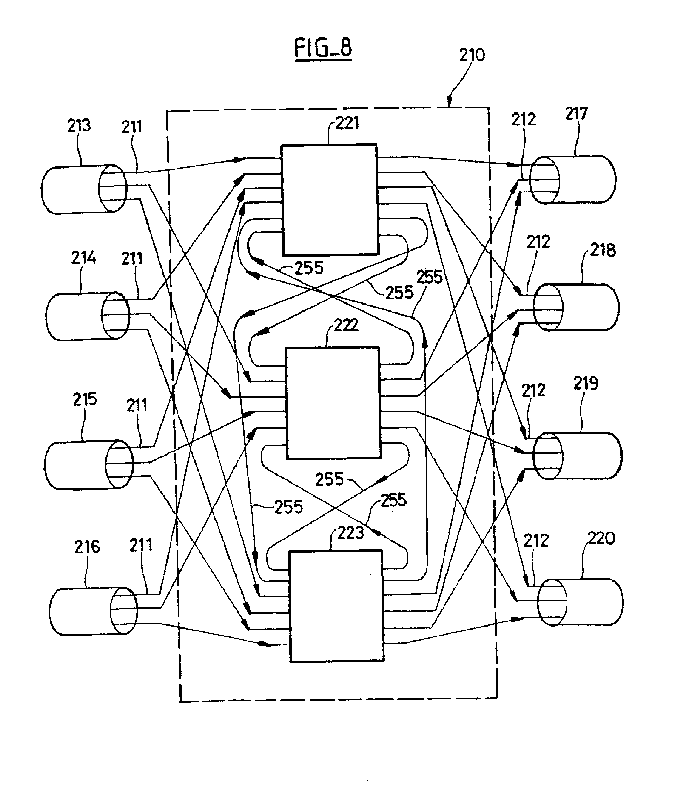

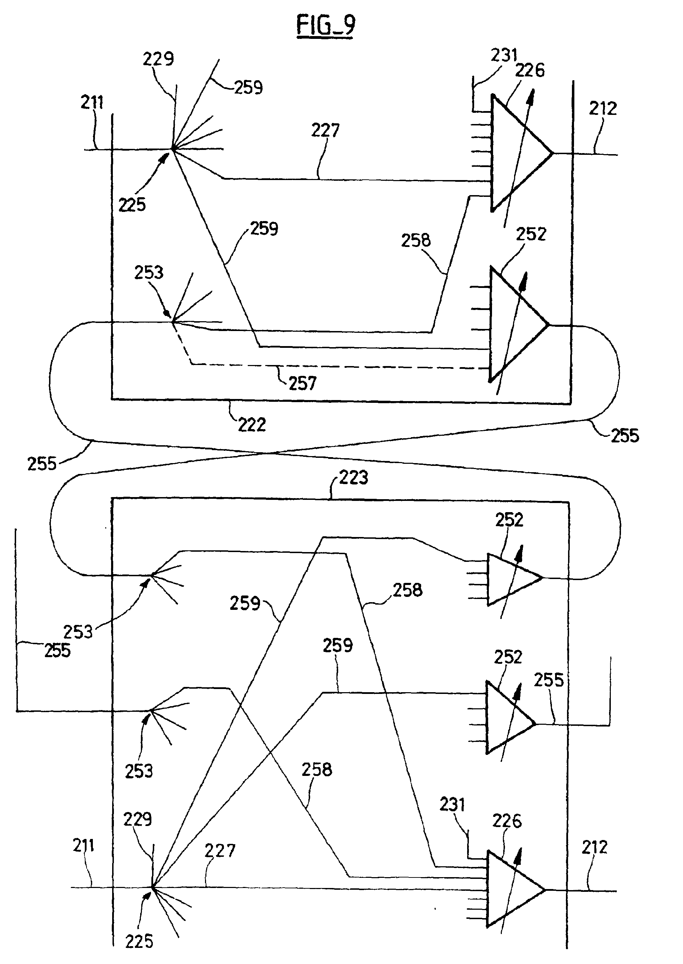

En référence aux figures 8 et 9, on va maintenant décrire un autre mode de réalisation du noeud de commutation, dans lequel des ensembles de recirculation sont prévus pour accroître la flexibilité du noeud, notamment dans les situations précitées. Les éléments identiques ou analogues à ceux des figures 1 et 2 portent le même chiffre de référence augmenté de 200.

Sur les figures 8 et 9, chacun des blocs 221 à 223 renvoie à un agencement de diffusion/sélection similaire à celui de la figure 2, modifié pour permettre la recirculation de canaux de longueurs d'onde entre les blocs. Comme précédemment, ces blocs représentés ne correspondent pas nécessairement à des structures matérielles du noeud. Dans les blocs 221 à 223, le nombre d'entrées et de sorties est plus élevé que sur la figure 2. Les entrées supplémentaires correspondent à des coupleurs de recirculation 253 et les sorties supplémentaires à des WSS de recirculation 252, qui sont représentés partiellement sur la figure 9.

Les WSS de recirculation 252 sont des commutateurs à sélection de longueurs d'onde dont le fonctionnement a été décrit plus haut. Chaque WSS de recirculation 252 reçoit des signaux WDM de plusieurs coupleurs de diffusion 225, par exemple de tous les coupleurs de diffusion 225 du même bloc dans l'exemple représenté. Ainsi le WSS de recirculation 252 reçoit des signaux optiques depuis un coupleur de diffusion de chaque groupe. Pour cela, les coupleurs de diffusion 225 ont des sorties supplémentaires par rapport à la figure 2, par exemple deux sorties supplémentaires, qui sont reliées par des liaisons optiques 259 à des entrées des WSS de recirculation 252. La figure 9 ne montre qu'une partie du bloc 222, et en particulier un seul des deux WSS de recirculation 252 du bloc.

Le signal obtenu en sortie d'un WSS de recirculation 252, appelé signal recirculé, est à chaque fois transmis par une liaison optique de recirculation 255 à l'entrée d'un coupleur de recirculation 253 situé dans un autre bloc. Un coupleur de recirculation 253 transmet à chaque fois le signal recirculé vers plusieurs WSS 226, par exemple de tous les WSS 226 du même bloc dans l'exemple représenté. Ainsi, le signal optique recirculé est transmis vers un WSS de chaque groupe simultanément. Pour cela, les WSS 226 ont des entrées supplémentaires par rapport à la figure 2, par exemple deux entrées supplémentaires, qui sont reliées par des liaisons optiques 258 à des sorties des coupleurs de recirculation 253 du même bloc. Optionnellement, des liaisons optiques 257 peuvent être prévues entre des coupleurs de recirculation 253 et des WSS de recirculation 252, mais cela est généralement inutile.

Le nombre d'ensembles de recirculation (c'est-à-dire WSS 252, liaison 255 et coupleur 253) agencés dans le noeud peut être choisi en fonction du niveau de flexibilité de commutation devant être obtenu. Dans l'exemple représenté, six ensembles de recirculation sont prévus pour que chaque bloc soit relié par une liaison optique de recirculation 255 aux deux autres blocs.

D'autres agencements sont possibles. De préférence, les WSS de recirculation 252 présentent un nombre total d'entrées supérieur ou égal au nombre des fibres optiques entrantes 211, de manière que tout signal entrant puisse être recirculé. De préférence, les coupleurs de recirculation 253 présentent un nombre total de sorties supérieur ou égal au nombre des fibres optiques sortantes 212, de manière que toute fibre sortante puisse transmettre un signal recirculé.

Dans un mode de réalisation non représenté, on prévoit des amplificateurs optiques au niveau des ensembles de recirculation pour compenser l'atténuation des signaux recirculés.

Dans les noeuds de commutation décrits ci-dessus, des commutateurs à sélection de longueurs d'onde servent en tant que modules de sélection de longueurs d'onde. Toutefois d'autres types de multiplexeurs programmables peuvent aussi être utilisés.

Les architectures qui ont été représentées essentiellement pour des noeuds de degré 3 ou 4 peuvent être réalisées avec une connectivité quelconque, y compris une connectivité asymétrique avec des entrées et des sorties en nombres différents. Le nombre de fibres dans chaque direction de liaison n'est pas nécessairement égal. Pour une direction de liaison donnée, le nombre de fibres entrantes est de préférence égal au nombre de fibres sortantes.

Un avantage particulier des architectures présentées sur les figures précédentes est l'extensibilité de ces architectures. Par exemple, un noeud de degré 3 tel que représenté sur la figure 4 peut être assez facilement étendu en un noeud de degré 4 tel que sur la figure 1 par ajout des éléments nécessaires, sans modification substantielle des éléments déjà installés. De même, des matrices de commutation spatiale et/ou des ensembles de recirculation peuvent être ajoutés progressivement à une architecture initiale pour tenir compte d'un trafic croissant et donc d'un accroissement des situations de contention. Cette extensibilité peut être favorisée en prévoyant dès l'origine un nombre suffisant de ports sur les WSS et un nombre suffisant de branches sur les coupleurs.

Sur les figures 1 à 9, on a prévu à chaque fois la possibilité d'extraire du trafic au niveau des coupleurs 25/125/225 et d'insérer du trafic au niveau des WSS 26/126/226. Toutefois, il existe d'autres agencements pour connecter un module d'insertion ou un module d'extraction de trafic dans un noeud optique. Ces agencements alternatifs peuvent être préférés par exemple pour limiter le nombre de sorties nécessaires au niveau des coupleurs 25/125/225 et le nombre d'entrées nécessaires au niveau des WSS 26/126/226. En particulier, les architectures reposant sur des coupleurs de diffusion et des WSS ayant un nombre de ports relativement faibles présentent l'avantage de limiter les pertes d'insertion du noeud. Dans certains points d'un réseau, il peut aussi être utile de prévoir des noeuds sans module d'extraction ou sans module d'insertion.

Bien que l'invention ait été décrite en liaison avec plusieurs modes de réalisation particuliers, il est bien évident qu'elle est seulement limitée par les revendications ci-jointes.

L'usage du verbe « comporter », « comprendre » ou « indure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

## Revendications

1. Dispositif de commutation de signaux optiques destiné à être relié à une pluralité de noeuds voisins, le dispositif comportant :
une pluralité de coupleurs de diffusion (25, 125, 225), chacun comportant une entrée destinée à être reliée à un noeud voisin et apte à recevoir un signal optique entrant à multiplexage de longueurs d'onde depuis ledit noeud voisin et une pluralité de sorties pour diffuser ledit signal optique entrant,
une pluralité de modules de sélection de longueurs d'onde (26, 126, 226), chacun comportant une pluralité d'entrées pour recevoir des canaux de longueur d'onde et
une sortie destinée à être reliée à un noeud voisin et apte à transmettre vers ledit noeud voisin un signal optique sortant à multiplexage de longueurs d'onde obtenu sélectivement à partir des canaux de longueur d'onde reçus sur ladite pluralité d'entrées,
des moyens de liaison optiques (27, 127, 40, 41, 42, 43, 45, 227) reliant une pluralité de sorties de transit choisies parmi lesdites pluralités de sorties des coupleurs de diffusion à une pluralité d'entrées de transit choisies parmi lesdites pluralités d'entrées desdits modules de sélection de longueurs d'onde pour faire transiter des signaux optiques entrants reçus par lesdits coupleurs de diffusion vers lesdits modules de sélection de longueurs d'onde, les moyens de liaison optiques comportant des liaisons optiques directes (27, 127, 227) reliant à chaque fois une desdites sorties de transit à une desdites entrées de transit,
lesdites liaisons optiques directes (27, 127, 227) étant agencées de manière à permettre, pour chacun desdits coupleurs de diffusion, la diffusion du signal optique entrant reçu par ledit coupleur de diffusion simultanément vers des modules de sélection de longueurs d'onde associés à tous les noeuds voisins autres que le noeud voisin associé à l'entrée du coupleur de diffusion,
et dans lequel lesdits modules de sélection de longueurs d'onde sont agencés en une pluralité de groupes, chacun desdits groupes comportant plusieurs desdits modules de sélection de longueurs d'onde, les modules de sélection de longueurs d'onde d'un groupe étant à chaque fois destinés à être reliés en sortie à un noeud voisin commun (17, 18, 19, 20, 117, 118, 119, 120, 217, 218, 219, 220), lesdites liaisons optiques directes reliant à chaque fois un coupleur de diffusion à au plus un seul module de sélection de longueurs d'onde par groupe.

2. Dispositif selon la revendication 1, dans lequel lesdits coupleurs de diffusion sont agencés en une pluralité de groupes (13,14, 15, 16, 113, 114, 115, 116, 213, 214, 215, 216), au moins un desdits groupes comportant plusieurs desdits coupleurs de diffusion, les coupleurs de diffusion d'un groupe étant à chaque fois destinés à être reliés en entrée à un noeud voisin commun.

3. Dispositif selon la revendication 2, dans lequel chacun desdits modules de sélection de longueurs d'onde comporte des entrées de transit en nombre sensiblement égal au nombre des groupes de coupleurs de diffusion.

4. Dispositif selon la revendication 2 ou 3, dans lequel lesdits groupes de coupleurs de diffusion et lesdits groupes de modules de sélection de longueurs d'onde sont en nombre égaux.

5. Dispositif selon l'une des revendications 2 à 4, dans lequel lesdits moyens de liaison optiques sont agencés de manière à permettre, pour chacun desdits modules de sélection de longueurs d'onde, le transit simultané vers ledit module de sélection de longueurs d'onde de signaux optiques provenant d'au moins un coupleur de diffusion de chaque groupe de coupleurs.

6. Dispositif selon l'une des revendications 1 à 5, dans lequel chacun desdits coupleurs de diffusion comporte ladite pluralité de sorties de transit en nombre sensiblement égal au nombre des groupes de modules de sélection de longueurs d'onde.

7. Dispositif selon l'une des revendications 1 à 6, dans lequel lesdites liaisons optiques directes comportent des guides d'onde (27, 127, 227) reliant à chaque fois une sortie de ladite pluralité de sorties de transit à une entrée de ladite pluralité d'entrées de transit.

8. Dispositif selon la revendication 7, dans lequel lesdits guides d'onde relient chaque coupleur de diffusion à un seul module de sélection de longueurs d'onde de chaque groupe.

9. Dispositif selon la revendication 7, dans lequel un coupleur de diffusion recevant ledit signal optique entrant d'un noeud voisin n'a aucune liaison optique directe (50) avec un groupe de modules de sélection de longueurs d'onde reliés audit noeud voisin.

10. Dispositif selon l'une des revendications 1 à 9, dans lequel lesdits moyens de liaison optiques comportent au moins une matrice de commutation spatiale optique (40, 43, 45) comportant des entrées reliées (41) à des sorties de transit des coupleurs de diffusion et des sorties reliées (42) à des entrées de transit des modules de sélection de longueur d'onde, lesdites sorties de la matrice de commutation spatiale optique étant reliées à au moins un module de sélection de longueurs d'onde de chaque groupe.

11. Dispositif selon la revendication 10, dans lequel la matrice de commutation spatiale optique comporte une entrée respective reliée à chacun desdits coupleurs de diffusion.

12. Dispositif selon la revendication 10 ou 11, dans lequel la matrice de commutation spatiale optique comporte une sortie respective reliée à chacun desdits modules de sélection de longueurs d'onde.

13. Dispositif selon l'une des revendications 1 à 12, dans lequel lesdits moyens de liaison optiques comportent une pluralité de matrices de commutation spatiale optique comportant des entrées reliées à des sorties de transit des coupleurs de diffusion et des sorties reliées à des entrées de transit des modules de sélection de longueurs d'onde, lesdites matrices de commutation spatiale optique étant en nombre inférieur ou égal au nombre desdites entrées d'un module de sélection de longueurs d'onde, chacun desdits module de sélection de longueurs d'onde ayant des entrées reliées à toutes lesdites matrices de commutation spatiale optique, chacun desdits coupleurs de diffusion ayant des sorties reliées à toutes lesdites matrices de commutation spatiale optique.

14. Dispositif selon l'une des revendications 1 à 13, comportant en outre :
au moins un ensemble de recirculation (252, 253, 255), ledit ensemble de recirculation comportant un module de recirculation de longueurs d'onde (252) comportant une pluralité d'entrées pour recevoir des canaux de longueur d'onde et
une sortie pour transmettre un signal optique recirculé à multiplexage de longueurs d'onde obtenu sélectivement à partir des canaux de longueur d'onde reçus sur ladite pluralité d'entrées, un coupleur de recirculation (253) comportant une entrée reliée à la sortie dudit module de recirculation de longueurs d'onde pour recevoir ledit signal optique recirculé correspondant et une pluralité de sorties pour diffuser ledit signal optique recirculé,
des deuxièmes moyens de liaison optiques (259) reliant une pluralité de sorties de recirculation des coupleurs de diffusion (225) à une pluralité des entrées dudit au moins un module de recirculation de longueurs d'onde (252) pour faire transiter des signaux optiques entrants reçus par lesdits coupleurs de diffusion vers ledit au moins un module de recirculation de longueurs d'onde,
des troisièmes moyens de liaison optiques (258) reliant une pluralité des sorties dudit au moins un coupleur de recirculation (253) à une pluralité d'entrées de recirculation des modules de sélection de longueurs d'onde (226) pour faire transiter ledit au moins un signal optique recirculé reçu par ledit au moins un coupleur de recirculation vers lesdits modules de sélection de longueurs d'onde.

15. Dispositif selon la revendication 14, dans lequel lesdits coupleurs de diffusion sont agencés en une pluralité de groupes (213, 214, 215, 216), au moins un desdits groupes comportant plusieurs desdits coupleurs de diffusion, les coupleurs de diffusion d'un groupe étant à chaque fois destinés à être reliés en entrée à un noeud voisin commun, lesdits deuxièmes moyens de liaison optiques (259) étant agencés de manière à faire transiter simultanément vers ledit ou chaque module de recirculation de longueurs d'onde (252) des signaux optiques entrants reçus par au moins un coupleur de diffusion de chaque groupe.

16. Dispositif selon l'une des revendications 14 à 15, dans lequel lesdits troisièmes moyens de liaison optiques (258) sont agencés de manière à permettre la diffusion dudit ou de chaque signal optique recirculé vers au moins un module de sélection de longueurs d'onde de chaque groupe simultanément.

17. Dispositif selon l'une des revendications 14 à 16, dans lequel un nombre total d'entrées du ou des modules de recirculation est supérieur ou égal au nombre des coupleurs de diffusion (225).

18. Dispositif selon l'une des revendications 14 à 17, dans lequel un nombre total de sorties du ou des coupleurs de recirculation est supérieur ou égal au nombre des modules de sélection de longueurs d'onde (226).

19. Dispositif selon l'une des revendications 14 à 18, dans lequel lesdits deuxièmes (259) et troisièmes (258) moyens de liaison optiques comportent des guides d'onde reliant à chaque fois une sortie de recirculation d'un coupleur de diffusion , respectivement une sortie d'un coupleur de recirculation, à une entrée d'un module de recirculation, respectivement une entrée de recirculation d'un module de sélection de longueurs d'onde.

20. Dispositif selon l'une des revendications 14 à 19, dans lequel aucune liaison optique directe (257) ne relie une sortie d'un coupleur de recirculation (253) à une entrée d'un module de recirculation de longueurs d'onde (252).

## Patentansprüche

1. Vorrichtung zum Schalten von optischen Signalen, dazu bestimmt, mit einer Vielzahl von benachbarten Knoten verbunden zu werden, wobei die Vorrichtung umfasst:
Eine Vielzahl von Broadcast-Kopplern (25, 125, 225) mit jeweils einem Eingang, der für den Anschluss an einen benachbarten Knoten vorgesehen und dazu ausgelegt ist, ein eingehendes wellenlängengemultiplextes optisches Signal von dem besagten benachbarten Knoten zu empfangen, und einer Vielzahl von Ausgängen, um das besagte eingehende optische Signal auszustrahlen ,
eine Vielzahl von Wellenlängenauswahlmodulen (26, 126, 226) mit jeweils einer Vielzahl von Eingängen zum Empfangen von Wellenlängenkanälen, und einem Ausgang, der für den Anschluss an einen benachbarten Knoten vorgesehen und dazu ausgelegt ist, ein selektiv von den an der besagten Vielzahl von Eingängen empfangenen Wellenlängenkanälen erhaltenes ausgehendes wellenlängengemultiplextes optisches Signal an den besagten benachbarten Knoten zu übertragen,
optische Verbindungsmittel (27, 127, 40, 41, 42, 43, 45, 227), welche eine Vielzahl von unter den besagten Vielzahlen von Ausgängen der Broadcast-Koppler ausgewählten Transit-Ausgängen mit einer Vielzahl von unter den besagten Mehrzahlen von Eingängen der besagten Wellenlängenauswahlmodule ausgewählten Transit-Eingängen verbinden,
um von den besagten Broadcast-Kopplern empfangene eingehende optische Signale an die besagten Wellenlängenauswahlmodule fließen zu lassen, wobei die optischen Verbindungsmittel direkte optische Verbindungen (27, 127, 227) umfassen, welche jeweils einen der besagten Transit-Ausgänge mit einem der besagten Transit-Eingänge verbinden,
wobei die besagten direkten optischen Verbindungen (27, 127, 227) eingerichtet sind, um für einen jeden der besagten Broadcast-Koppler das simultane Ausstrahlen des von dem besagten Broadcast-Koppler empfangene eingehende optische Signal an mit allen anderen benachbarten Knoten, mit Ausnahme des mit dem Eingang des Broadcast-Kopplers assoziierten benachbarten Knoten, assoziierte Wellenlängenauswahlmodule zu ermöglichen,
und wobei die besagten Wellenlängenauswahlmodule in einer Vielzahl von Gruppen angeordnet sind, wobei eine jede der besagten Gruppen mehrere der besagten Wellenlängenauswahlmodule umfasst, wobei die Wellenlängenauswahlmodule einer Gruppe jeweils dazu bestimmt sind, am Ausgang mit einem gemeinsamen benachbarten Knoten (17, 18, 19, 20, 117, 118, 119, 120, 217, 218, 219, 220) verbunden zu werden, wobei die besagten direkten optischen Verbindungen jeweils einen Broadcast-Koppler mit höchstens einem einzigen Wellenlängenauswahlmodul pro Gruppe verbinden.

2. Vorrichtung nach Anspruch 1, wobei die besagten Broadcast-Koppler in einer Vielzahl von Gruppen (13, 14, 15, 16, 113, 114, 115, 116, 213, 214, 215, 216) angeordnet sind, wobei mindestens eine der besagten Gruppen mehrere der besagten Broadcast-Koppler umfasst, wobei die Broadcast-Koppler einer Gruppe jeweils dazu bestimmt sind, am Eingang mit einem gemeinsamen benachbarten Knoten verbunden zu werden.

3. Vorrichtung nach Anspruch 2, wobei ein jedes der besagten Wellenlängenauswahlmodule Transit-Eingänge in einer Anzahl, welche im Wesentlichen der Anzahl der Gruppen von Broadcast-Kopplern entspricht, umfasst.

4. Vorrichtung nach Anspruch 2 oder 3, wobei die besagten Gruppen von Broadcast-Kopplern und die besagten Gruppen von Wellenlängenauswahlmodulen in derselben Anzahl vorhanden sind.

5. Vorrichtung nach einem der Ansprüche 2 bis 4, wobei die besagten optischen Verbindungsmittel eingerichtet sind, um für ein jedes der besagten Wellenlängenauswahlmodule den simultanen Durchfluss von von mindestens einem Broadcast-Koppler einer jeden Gruppe von Kopplern kommenden optischen Signalen zu dem besagten Wellenlängenauswahlmodul zu ermöglichen.

6. Vorrichtung nach einem der Ansprüche 1 bis 5, wobei ein jeder der besagten Broadcast-Koppler die besagte Vielzahl von Transit-Ausgängen in einer Anzahl, welche im Wesentlichen der Anzahl der Gruppen von Wellenlängenauswahlmodulen entspricht, aufweist.

7. Vorrichtung nach einem der Ansprüche 1 bis 6, wobei die besagten direkten optischen Verbindungen Wellenleiter (27, 127, 227) umfassen, welche jeweils einen Ausgang der besagten Vielzahl von Transit-Ausgängen mit einem Eingang der besagten Vielzahl von Transit-Eingängen verbinden

8. Vorrichtung nach Anspruch 7, wobei die besagten Wellenleiter jeden Broadcast-Koppler mit einem einzigen Wellenlängenauswahlmodul einer jeden Gruppe verbinden.

9. Vorrichtung nach Anspruch 7, wobei ein Broadcast-Koppler, welcher das besagte von einem benachbarten Knoten eingehende optische Signal empfängt, keine direkte optische Verbindung (50) mit einer Gruppe von mit dem besagten benachbarten Knoten verbundenen Wellenlängenauswahlmodulen hat.

10. Vorrichtung nach einem der Ansprüche 1 bis 9, wobei die besagten optischen Verbindungsmittel mindestens eine optische räumliche Schaltmatrix (40, 43, 45) mit mit Transit-Ausgängen der Broadcast-Koppler verbundenen Eingängen (41) und mit Transit-Eingängen der Wellenlängenauswahlmodule verbundenen Ausgängen (42) umfassen, wobei die besagten Ausgänge der optischen räumlichen Schaltmatrix mit mindestens einem Wellenlängenauswahlmodul einer jeden Gruppe verbunden sind.

11. Vorrichtung nach Anspruch 10, wobei die optische räumliche Schaltmatrix einen jeweils mit einem jeden der besagten Broadcast-Koppler verbundenen Eingang aufweist.

12. Vorrichtung nach Anspruch 10 oder 11, wobei die optische räumliche Schaltmatrix einen jeweils mit einem jeden der besagten Wellenlängenauswahlmodule verbundenen Ausgang aufweist.

13. Vorrichtung nach einem der Ansprüche 1 bis 12, wobei die besagten optischen Verbindungsmittel eine Vielzahl von optischen räumlichen Schaltmatrizen mit Eingängen, die mit Transit-Ausgängen der Broadcast-Koppler verbundenen sind, und Ausgängen, die mit Transit-Eingängen der Wellenlängenauswahlmodule verbundenen sind, umfassen, wobei die besagten optischen räumlichen Schaltmatrizen in einer Anzahl, welche niedriger als die oder gleich der Anzahl der besagten Eingänge eines Wellenlängenauswahlmoduls ist, vorhanden sind, wobei ein jedes der besagten Wellenlängenauswahlmodule mit allen der besagten optischen räumlichen Schaltmatrizen verbundene Eingänge aufweist, wobei ein jeder der besagten Broadcast-Koppler mit allen der besagten optischen räumlichen Schaltmatrizen verbundene Ausgänge aufweist.

14. Vorrichtung nach einem der Ansprüche 1 bis 13, weiterhin umfassend:
Mindestens eine Rücklaufbaugruppe (252, 253, 255), wobei die besagte Rücklaufbaugruppe ein Wellenlängenrücklaufmodul (252) mit einer Vielzahl von Eingängen für den Empfang von Wellenlängen kanälen und einem Ausgang für die Übertragung eines rücklaufenden wellenlängengemultiplexten optischen Signals, welches selektiv aus den an der besagten Vielzahl von Eingängen empfangenen Wellenlängenkanälen erhalten wird, umfasst, wobei ein Rücklaufkoppler (253) einen mit dem Ausgang des besagten Wellenlängenrücklaufmodul verbundenen Eingang für den Empfang des besagten entsprechenden rücklaufenden optischen Signals und eine Vielzahl von Ausgängen für die Ausstrahlung des besagten rücklaufenden optischen Signals umfasst,
zweite optische Verbindungsmittel (259), welche eine Vielzahl von Rücklaufausgängen der Broadcast-Koppler (225) mit einer Vielzahl von Eingängen des besagten mindestens einen Wellenlängenrücklaufmoduls (252) verbinden, um von den besagten Broadcast-Kopplern empfangene eingehende optische Signale an das besagte mindestens eine Wellenlängenrücklaufmodul durchfließen zu lassen,
dritte optische Verbindungsmittel (258), welche eine Vielzahl von Ausgängen des besagten mindestens einen Rücklaufkopplers (253) mit einer Vielzahl von Rücklaufeingängen der Wellenlängenauswahlmodule (226) verbinden, um das besagte mindestens eine von dem besagten mindestens einen Rücklaufkoppler empfangene rücklaufende optische Signal an die besagten Wellenlängenauswahlmodule fließen zu lassen.

15. Vorrichtung nach Anspruch 14, wobei die besagten Broadcast-Koppler in einer Vielzahl von Gruppen (213, 214, 215, 216), angeordnet sind, wobei mindestens eine der besagten Gruppen mehrere der besagten Broadcast-Koppler umfasst, wobei die Broadcast-Koppler einer Gruppe jeweils dazu bestimmt sind, am Eingang mit einem gemeinsamen benachbarten Knoten verbunden zu werden, wobei die zweiten optischen Verbindungsmittel (259) eingerichtet sind, um von mindestens einem Broadcast-Koppler einer jeden Gruppe empfangene eingehende optische Signale gleichzeitig zu dem besagten oder zu jedem Wellenlängenrücklaufmodul (252) durchfließen zu lassen.

16. Vorrichtung nach einem der Ansprüche 14 bis 15, wobei die besagten dritten optischen Verbindungsmittel (258) eingerichtet sind, um die Ausstrahlung des besagten oder eines jeden zu mindestens einem Wellenlängenauswahlmodul einer jeden Gruppe gleichzeitig zu ermöglichen.

17. Vorrichtung nach einem der Ansprüche 14 bis 16, wobei eine Gesamtanzahl der Eingänge des oder der Rücklaufmodul(s)(e) größer als die oder gleich der Anzahl der Broadcast-Koppler (225) ist.

18. Vorrichtung nach einem der Ansprüche 14 bis 17, wobei eine Gesamtanzahl der Ausgänge des oder der Rücklaufkoppler(s) größer als die oder gleich der Anzahl der Wellenlängenauswahlmodule (226) ist.

19. Vorrichtung nach einem der Ansprüche 14 bis 18, wobei die besagten zweiten (259) und dritten (258) optischen Verbindungsmittel Wellenleiter umfassen, welche jeweils einen Rücklaufausgang eines Broadcast-Kopplers, bzw. einen Ausgang eines Rücklaufkopplers, mit einem Eingang eines Rücklaufmoduls, bzw. einem Rücklaufeingang eines Wellenlängenauswahlmoduls, verbinden.

20. Vorrichtung nach einem der Ansprüche 14 bis 19, wobei keine direkte optische Verbindung (257) einen Ausgang eines Rücklaufkopplers (253) mit einem Eingang eines Wellenlängenrücklaufmoduls (252) verbindet.

## Claims

1. An optical signal switching device intended to be connected to a plurality of neighboring nodes, which device comprises:
a plurality of broadcast couplers (25, 125, 225), each comprising an input intended to be connected to a neighboring node and capable of receiving an incoming Wavelength-division multiplexed optical signal from said neighboring node and a plurality of outputs to broadcast said incoming optical signal,
a plurality of wavelength selection modules (26, 126, 226), each comprising a plurality of inputs for receiving wavelength channels and an output intended to be connected to a neighboring node and capable of transmitting to said neighboring node an outgoing wavelength-division multiplexed optical signal selectively obtained from wavelength channels received at said plurality of inputs,
optical linking means (27, 127, 40, 41, 42, 43, 45, 227) connecting a plurality of transit nodes chosen from among said pluralities of broadcast coupler outputs to a plurality of transit inputs chosen from among said pluralities of inputs of said wavelength selection modules in order to transmit incoming optical signals received by said broadcast couplers to said wavelength selection modules, the optical linking means comprising direct optical links (27, 127, 227) each connecting one of said transit nodes to one of said transit inputs,
said direct optical links (27, 127, 227) being arranged so as to enable, for each of said broadcast couplers, the simultaneous broadcasting of the incoming optical signal received by said broadcast coupler to wavelength selection modules associated with all neighboring nodes other than the neighboring node associated with the input of the broadcast coupler,
and wherein said wavelength selection modules are arranged into a plurality of groups, each of said groups comprising multiple said wavelength selection modules, the wavelength selection modules of a group being intended in each case to be connected from their output to a common neighboring node (17, 18, 19, 20, 117, 118, 119, 120, 217, 218, 219, 220), said direct optical links connecting each broadcast coupler to no more than one single Wavelength selection module per group.

2. A device according to claim 1, wherein said broadcast couplers are arranged into a plurality of groups (13, 14, 15, 16, 113, 114, 115. 116, 213, 214, 215, 216), at least one of said groups comprising multiple said broadcast couplers, the broadcast couplers of one group each being intended to be connected to a common neighboring node, such as via the same optical cable.

3. A device according to claim 2, wherein each of said wavelength selective modules comprises about as many of said outputs as the number of groups of broadcast couplers.

4. A device according to claims 2 or 3, wherein said groups of broadcast couplers and said groups of wavelength selection modules are equal in number.

5. A device according to one of the claims 2 to 4, wherein said optical linking means are configured so as to enable, for each of said wavelength selection modules, the simultaneous routing of optical signals from at least one broadcast coupler in each group of couplers to said wavelength selection module.

6. A device according to one of the claims 1 to 5, wherein each of said broadcast couplers comprises said plurality of routing outputs in an amount roughly equal to the number of groups of wavelength selection modules.

7. A device according to one of the claims 1 to 6, wherein said direct optical links comprise waveguides (27, 127, 227) that each connect an output of said plurality of routing outputs to an input of said plurality of routing inputs.

8. A device according to claim 7, wherein said waveguides connect each broadcast coupler to a single wavelength selection module in each group.

9. A device according to claim 7, wherein a broadcast coupler receiving said incoming optical signal from a neighboring node has no direct optical link (50) with a group of wavelength selective modules connected to said neighboring node.

10. A device according to one of the claims 1 to 9, wherein said optical linking means comprise at least one optical spatial switching matrix (40, 43, 45) comprising inputs (41) connected to routing outputs of the broadcast couplers, and outputs (42) connected to routing inputs of wavelength selective modules, said optical spatial switching matrix outputs being connected to at least one wavelength selective module from each group.

11. A device according to claim 10, wherein the optical spatial switching matrix comprises a respective input connected to each of said broadcast couplers.

12. A device according to claim 10 or 11, wherein the optical spatial switching matrix comprises a respective output connected to each of said wavelength selection modules.

13. A device according to one of the claims 1 to 12, wherein said optical linking means comprise a plurality of optical spatial switching matrices comprising inputs connected to routing outputs of broadcast couplers and outputs connected to routing inputs of wavelength selection modules, the number of said optical spatial switching matrices being less than or equal to the number of said inputs of a wavelength selective module, each of said wavelength selective modules having inputs connected to all of said optical spatial switching matrices, each of said broadcast couplers having outputs connected to all of said optical spatial switching matrices.

14. A device according to one of the claims 1 to 13, further comprising:
at least one recirculation assembly (252, 253, 255), said recirculation assembly comprising a wavelength recirculation module (252) comprising a plurality of inputs for receiving wavelength channels and an output for transmitting a recirculated wavelength division multiplexed optical signal selectively obtained from wavelength channels received at said plurality of inputs, a recirculation coupler (253) comprising an input connected to the output of said wavelength recirculation module in order to receive said corresponding recirculated optical signal, and a plurality of outputs for distributing said recirculated optical signal,
second optical linking means (259) connecting a plurality of recirculation outputs from the broadcast couplers (225) to a plurality of inputs of said at least one wavelength recirculation module (22) in order to route incoming optical signals received by said broadcast couplers to said at least one wavelength recirculation module,
third optical linking means (258) connecting a plurality of the outputs from said at least one recirculation coupler (253) to a plurality of recirculation inputs of wavelength selective modules (226) in order to route said at least one recirculated optical signal received by said at least one recirculation coupler to said wavelength selective modules.

15. A device according to claim 14, wherein said broadcast couplers are arranged into a plurality of groups (213, 214, 215, 216), at least one of said groups comprising several of said broadcast couplers, the broadcast couplers of one group each being intended to be connected to the input of a common neighboring node, said second optical linking means (259) being arranged in such a way as to simultaneously route incoming optical signals received by at least one broadcast coupler in each group to said or each wavelength recirculation module (252).

16. A device according to one of the claims 14 to 15, wherein said third optical linking means (258) are arranged in such a way as to enable the broadcasting of said or each recirculated optical signal to at least one wavelength selection module from each group simultaneously.

17. A device according to one of the claims 14 to 16, wherein a total number of inputs of the recirculation module(s) is greater than or equal to the number of broadcast couplers (225).

18. A device according to one of the claims 14 to 17, wherein a total number of recirculation coupler outputs is greater than or equal to the number of wavelength selective modules (226).

19. A device according to one of the claims 14 to 18, wherein said second (259) and third (258) optical linking means comprise waveguides that each connect a recirculation output of a broadcast coupler, or respectively an output of a recirculation coupler, to an input of a recirculation module, or respectively a recirculation input of a wavelength selection module.

20. A device according to one of the claims 14 to 19, wherein no direct optical link (257) connects a recirculation coupler's (253) output to a wavelength recirculation module's (252) input.
